# EUROPÄISCHE PATENTSCHRIFT

(11) **EP 2 436 720 B1**
(45) Veröffentlichungstag und Bekanntmachung des Hinweises auf die Patenterteilung: **23.07.2014**
(21) Anmeldenummer: 11182229.2
(22) Anmeldetag: 21.09.2011
(51) Int. Cl.: C08J 3/00, C08J 3/215, C08J 3/22

(54) **Verfahren zur Herstellung von nanopartikelhaltigen Masterbatches**
Method for producing master batches containing nanoparticles
Procédé de fabrication d'un mélange maître de couleurs contenant des nanoparticules

(30) Priorität: 04.10.2010 EP 10186382
(43) Veröffentlichungstag der Anmeldung: 04.04.2012
(73) Patentinhaber: Rhein Chemie Rheinau GmbH, 68219 Mannheim (DE)
(72) Erfinder: Schröder, Andreas, 69469 Weinheim (DE); Kohler, Robert, 68794 Oberhausen-Rheinhausen (DE); Briquel, Luc, 67100 Strasbourg (FR)
(74) Vertreter: Siegers, Britta

(56) Entgegenhaltungen:
- DE-A1-102008 034 522
- US-A1- 2008 312 364

## Beschreibung

Die Erfindung betrifft ein neues Verfahren zur Herstellung von Carbon-Nanotubes- haltigen Masterbatches für Elastomere.

Carbon-Nanotubes (CNT) zeichnen sich durch eine hohe Festigkeit und hohe thermische sowie elektrische Leitfähigkeit aus. Es besteht ein hohes Interesse, diese vorgenannten Eigenschaften vom mikro-/nanoskaligen Bereich in makroskopische Komposite, wie z.B. Gummimischung für Reifen Schwingungsisolatoren, Schläuche, Kabelummantelungen, Profile oder Dichtungen, zu übertragen.

CNTs werden hergestellt über Chemical Vapour Deposition (CVD)-Verfahren und liegen als Agglomerate vor. Diese Agglomerate erschweren die Dispergierbarkeit.

Unter dem Begriff Masterbatch versteht man in einem Binder vordispergierte Additive vorzugsweise in Form von Granulate mit Gehalten an Additiven, die höher sind als in der Endanwendung.

In Fällen schlechter Dispergierbarkeit von pulverförmigen Rohstoffen, wie zum Beispiel Ruß und Kieselsäure, hat es sich als vorteilhaft erwiesen, diese zunächst in hochkonzentrierter Form in einen polymeren Binder, wie z.B. Nauturkautschuk (NR), Styrolbutadienkautschuk (SBR), Ethylenpropylendienkautschuk (EPDM) Nitrilkautschuk (NBR) einzubringen (als Masterbatch) und diesen später in den Kautschuk einzumischen (DE-A-1195941; EP-A 1095961; EP-A 1304347, US-A 6413478).

In den bislang bekannten Verfahren (EP-A 1 995 274 , WO- 2008047022) zur Herstellung von CNT-Masterbatches werden die CNTs über einen Knetprozess in einen polymeren Binder, wie Nauturkautschuk (NR), Styrolbutadienkautschuk (SBR), Ethylenpropylendienkautschuk (EPDM) oder auch Nitrilkautschuke (NBR), eingebracht. Um homogenere Mischungen herzustellen sind dabei lange Mischzeiten erforderlich. Mit zunehmender Mischzeit, d.h. mit zunehmender Homogenität und Dispersion der Füllstoffe sinkt allerdings nachteiliger-weise die elektrische Leitfähigkeit (H. H. Le, et al, Kautschuk Gummi Kunststoffe, 62 (2009) S. 326).

In anderen bislang bekannten Verfahren, z.B. beschrieben in der US-A 20080312364, DE-A 102006055106, WO2009063008, EP 01845124 A1, werden dafür zunächst mechanisch die Aggregate in niedrigviskosere Phase zerstört und dann mit Dispergierhilfsmitteln versetzt. Diese Verfahren haben den Nachteil, dass die daraus erhaltenen Masterbatches einen hohen

Anteil an Dispergierhilfsmittel enthalten, der sich oft störend im späteren Endprodukt auswirkt.

Aufgabe der vorliegenden Erfindung war es daher, ein effektives Verfahren zur Herstellung von Carbon-Nanotubes-haltigen Masterbatches bereitzustellen, nach dem diese so hergestellt werden, dass die positiven Eigenschaften der CNTs möglichst ohne Qualitätsverlust auf den Masterbatch und dem späteren Endprodukt übertragen werden können und welches zudem kostengünstig ist.

Überraschenderweise wurde nun ein einfaches und kostengünstiges Verfahren zur Herstellung Carbon-Nanotubes-haltigen Masterbatches gefunden, bei dem die Carbon-Nanotubes, in einer wäßrigen Suspension in Anwesenheit eines Dispergiermittels mittels Ultraschallhomogenisator ausgestattet mit einer Durchflusszelle dispergiert, anschließend mit einem Polymer-Latex vermischt und danach koaguliert, gegebenenfalls filtriert und gewaschen, und anschließend getrocknet werden. Das Dispergierhilfsmittel verbleibt größtenteils im Dispersionsmedium (zu mehr als 65 %) und hat daher kaum noch negative Auswirkungen auf das Elastomer. Bei dem erfindungsgemäßen Verfahren bleiben die positiven Eigenschaften der CNTs im so hergestellten Masterbatch und dem späteren Endprodukt unverändert erhalten.

Gegenstand der vorliegenden Erfindung ist daher ein Verfahren zur Herstellung von Carbon-Nanotubes-haltigen Masterbatches, in dem die Carbon-Nanotubes, in einer wäßrigen Suspension in Anwesenheit mindestens eines Dispergiermittels mittels Ultraschallhomogenisator ausgestattet mit einer Durchflusszelle dispergiert, anschließend mit mindestens einem Polymere-Latex vermischt und danach koaguliert, gegebenenfalls filtriert und gewaschen, und anschließend getrocknet werden.

Die in dem erfindungsgemäßen Verfahren eingesetzten CNTs weisen vorzugsweise zu 90 % Agglomerate größer als 10 µm und kleiner als 1 mm auf (gemessen mit Laserlichtstreuung in wässriger Suspension).

Bevorzugt ist der Einsatz von Carbon-Nantotubes.

Bei den Carbon-Nantotubes, die im Sinne der Erfindung eingesetzt werden, handelt es sich um alle gängigen CNTs, vorzugsweise single-wall, double wall, multi-wall, etc. Diese sind kommerziell verfügbar, z.B. bei der Firma BayerMaterial Science AG oder können nach den, dem Fachmann geläufigen Chemical Vapor Deposition Verfahren oder anderen Verfahren hergestellt werden.

Als Polymere für den Polymer-Latex eignen sich alle über Emulsionspolymerisation herstellbaren Polymere sowie Naturkautschuk (NR). Vorzugsweise sind dies (Isoprenkautschuk (IR), Styrol-Butadien-Kautschuk (SBR), carboxylierter Styrol-Butadien-Kautschuk (XSBR), Butadienkautschuk (BR), Isopren-isobutylen-Kautschuk (IIR), Polychloroprenkautschuk (CR), Acrylnitril-Butadien-Kautschuk (NBR), hydrierter Acrylnitril-Butadien-Kautschuk (HNBR), carboxylierter Acrylnitril-Butadien-Kautschuk (XNBR), hydrierter carboxylierter Acrylnitril-Butadien-Kautschuk (HXNBR), Fluorkautschuk (FKM), perfluorierter Fluorkautschuk (FFKM), Acrylat-Ethylen-Kautschuk (AEM), Acrylatkautschuk (ACM), Ethylen-Methylen-Acrylatkautschuk (EMA) und/oder Ethylen-Vinylacetat-Kautschuk (EVA) sowie Acrylsäureester-Styrol-Copolymerisate.

Im Fall des Polymer-Latex beträgt der Feststoff-Anteil im Latex vorzugsweise > 15%, besonders bevorzugt > 30 %, ganz besonders bevorzugt > 50%, bezogen auf den Latex.

Bei dem Latex-Material handelt es sich vorzugsweise um Wasser. Die Herstellung des Latex erfolgt nach den dem Verfahren bekannten Verfahren durch Emulsionspolymerisation, wie zum Beispiel in dem Lehrbuch "Makromolekulare Chemie" von M.D. Lechner, K. Gehrke, E.H. Nordermeier Birkhäuser Verlag 1993, Seiten 127 bis 129 beschrieben.

Dispergiermittel im Sinne der Erfindung sind oberflächenaktive Substanzen, die die Grenzflächenspannung zwischen der Komponente, die dispergiert werden soll, und dem Dispersionsmedium herabsetzen. Dabei handelt es sich bevorzugt um Seifen, Natriumsalze der Kondensationsprodukte von Alkylnaphthalinsulfonsäuren mit Formaldehyd, Triethanolamin, Amoniumoleat, amoniakalische Lösung von Kasein, Natrium-Kaliumpolyphosphate, Alkylsulfate, Laurylpyridinchlorid, c-Cetyl-Betain, Polyglykohlether, olefinische Coplymere mit anionischem Charakter, Alkylammonium-Salze von polyfunktionellen Polymeren mit anionischem Charakter und hochmolekularen Block-Copolymeren mit anionischem Charakter. Vorzugsweise werden Alkylammonium-Salze von polyfunktionellen Polymeren mit anionischem Charakter eingesetzt.

Darüber hinaus können als erfindungsgemäß geeignete Dispergiermittel grundsätzlich alle dem Fachmann zu diesem Zweck bekannten kationischen, anionischen und nicht ionischen Netzmittel, Tenside, Dispergiermittel etc. verwendet werden.

In einer weiteren bevorzugten Ausführungsform der Erfindung ist das Dispergiermittel wasserlöslich und verbleibt nach der Koagulation größtenteils im Dispersionsmedium (Wasser), vorzugsweise Alkylammonium-Salze von polyfunktionellen Polymeren mit anionischem Charakter, kommerziell erhältlich unter dem Namen Byk® 151 bei der Firma Byk GmbH. Besonders bevorzugt ist die Ausführungsform des erfindungsgemäßen Verfahrens, bei der mehr als 65% des Dispergiermittels in der wässrigen Phase der Suspension verbleiben.

Des Weiteren können zusätzlich zu den Dispergiermitteln auch verfärbende und nicht verfärbende Alterungsschutzmittel, vorzugsweise. Paraphenylendiamine, Isopropylphenylparaphenylendiamin (IPPD), Para-Phenylen-Diamin (6PPD), N,N-ditoly-p-phenylendiamine (DTPD), etc., Amine, vorzugsweise Trimethyl-1,2-dihydrochinolin (TMQ), (Phenyl)amin]-1,4-naphthalendion (PAN), Bis(4-octylphenyl)amin (ODPA), styrolisiertes Diphenylamin (SDPA), etc.), Mono- und Bisphenole, vorzugsweise 2,2'-Methylen-bis-(4-methyl-6-tert.butylphenol(BPH), 2,2'-Isobutyliden-bis-(4,6-dimethyl-phenol) (NKF), 2,2'-Dicyclopentadienyl-bis-(4-methyl-6-tert.-butyl-phenol) (SKF), 2,2'-Methylen-bis-(4-methyl-6-cyclohexyl-phenol (ZKF), 2,6-Di-tert.-butyl-p-kresol (BHT), substituiertes Phenol (DS), styrolisierte Phenole (SPH), Mercatpbenzimidazole, vorzugsweise 2-Mercaptobenzimidazol (MBI), 2-Mercaptomethyl-benzimidazole (MMBI), Zink-4- und -5-methyl-2-mercaptobenzimidazole (ZMMBI), etc., Olefine, paraffinische und/oder aromatische Weichmacher eingesetzt werden. Die Zusammensetzung wird dabei auf das gewünschte Endprodukt abgestimmt.

Weichmacher im Sinne der Erfindung sind bevorzugt langkettige Ester oder Ether, vorzugsweise Thioester, Phthalsäureseter, Alkylsulfonsäureester, Adipinsäureester, Sebacinsäuresester, Dibenzylether oder Mineralöle (paraffinische, aromatische, naphthenische oder synthetische Öle),

In dem erfindungsgemäßen Verfahren ist es bevorzugt Ultraschallsonotroden zur Dispergierung der CNT-Agglomerate mit einer Frequenz zwischen 18 und 30 kHz und einer Leistung zwischen 0,1 kW bis 20 kW einzusetzen.

Die Herstellung des CNT-haltigen Suspension erfolgt vorzugsweise wie nachstehend beschrieben:
Zur Herstellung eines CNT-Masterbatches wird vorzugsweise zunächst eine wässrige CNT-Suspension mit einem Dispergiermittel zum Beispiel mit einem Flügelrührer oder mit einem Dissolver der Firma Pendraulik GmbH hergestellt. Die CNT-Agglomerate werden dabei vordispergiert. Die anschließende Dispergierung der CNT-Agglomerate erfolgt dabei mit einem

Ultraschallhomogenisator, der z.B. erhältlich ist unter dem Namen UIP 1000hd bei der Firma Hielscher Ultrasonics GmbH. Dieser Ultraschallhomogenisator kann neben der Ultraschallsonotrode BS2d22 auch weitere Aggregate, wie z.B. ein Booster B2-1.8 zur Verstärkung des Energieeintrages enthalten. Zur kontinuierlichen Durchführung der Dispergierung ist der Ultraschallhomogenisator dabei mit einer Durchflusszelle z.B. erhältlich unter dem Namen FC100L1K-1S mit Insert22 bei der Firma Hielscher Ultrasonics GmbH ausgestattet. Die Suspension wird dabei mit einer Geschwindigkeit von wenigstens 200 g/min durch die Durchflusszelle gepumpt. Um höhere Dispersionsgrade zu erreichen kann die Suspension mehrmals durch die Durchflusszelle gepumpt werden oder eine Kaskade von Ultraschallhomagenisatoren verwendet werden.

Die Dispergierung erfolgt dabei vorzugsweise bei möglichst tiefen Temperaturen zwischen 0°C und 100°C bei Atmosphärendruck. Ebenfalls möglich ist die Dispergierung unter Druck, vorzugsweise bis 3 bar Überdruck. In diesen Fällen sind je nach Druck auch Temperaturen oberhalb von 100°C möglich, entsprechend der Siedetemperatur von Wasser beim jeweils vorherrschenden Absolutdruck.

In einer bevorzugten Ausführungsform der vorliegenden Erfindung beträgt der Anteil an Carbon-Nanotubes in der Suspension mindestens 5 %, in einer bevorzugten Form 10%, und das Verhältnis von Carbon-Nanotubes zu Dispergiermittels 0,1 : 1 bis 1: 2,5 in einer besonders bevorzugten Form beträgt das Verhältnis von Carbon-Nanotubes zu Dispergiermittel 0,1 : 1 bis 0,5: 1.

In dem erfindungsgemäßen Verfahren erfolgt die Vermischung der wäßrigen CNT-haltigen Suspension mit dem Polymerlatex vorzugsweise wie folgt:
Die Suspension wird in einem Gefäß mit vorzugsweise einem Flügelrührer vorgelegt und der Polymerlatex eingerührt bevor diese zur Koagulation einer Elektrolytlösung oder säurehaltigen Lösung, vorzugsweise. Ameisensäure, bevorzugt unter Rühren, zugeführt wird. Bei der Elektrolytlösung handelt es sich vorzugsweise um Sulfat-haltige Lösungen, insbesondere eine Mg - oder Aluminium - Sulfat- Lösung.

In dem erfindungsgemäßen Verfahren erfolgt die Koagulation dabei vorzugsweise bei Temperaturen zwischen 20 und < 100°C.

Zur Abtrennung des CNTs-haltigen Masterbatches wird das hergestellte Koagulat vorzugsweise durch Filtration abgetrennt.

In einer weiteren Ausführungsform der vorliegenden Erfindung wird das Koagulat anschließend durch Waschen vom Dispergiermittel befreit. Wünschenswert ist eine Anteil von < 25%, bezogen auf die CNTs. Das Waschen erfolgt dabei vorzugsweise unter Verwendung von polaren Lösungsmitteln, vorzugsweise Wasser.

Die Trocknung erfolgt vorzugsweise gleichzeitig durch Verdampfen des Restwassers durch einen Knetprozess vorzugsweise in einem Innenmischer oder in einem Extruder unter Anlegen von Vakuum.

In einem nachfolgenden Schritt können die nach dem erfindungsgemäßen Verfahren hergestellten Masterbatches dann in Kautschuke oder Kautschukmischungen eingemischt werden.

Als Kautschuke sind in diesen Fällen die Polymere bevorzugt, die bereits bei der Herstellung des Polymer-Latex verwendet wurden. Es können aber auch andere Polymere oder Polymermischungen eingesetzt werden.

Dabei handelt es sich vorzugsweise um alle über Emulsionspolymerisation herstellbaren Polymere sowie Naturkautschuk (NR). Vorzugsweise sind dies (Isoprenkautschuk (IR), Styrol-Butadien-Kautschuk (SBR), carboxylierter Styrol-Butadien-Kautschuk (XSBR), Butadienkautschuk (BR), Isopren-isobutylen-Kautschuk (IIR), Polychloroprenkautschuk (CR), Acrylnitril-Butadien-Kautschuk (NBR), hydrierter Acrylnitril-Butadien-Kautschuk (HNBR), carboxylierter Acrylnitril-Butadien-Kautschuk (XNBR), hydrierter carboxylierter Acrylnitril-Butadien-Kautschuk (HXNBR), Fluorkautschuk (FKM), perfluorierter Fluorkautschuk (FFKM), Acrylat-Ethylen-Kautschuk (AEM), Acrylatkautschuk (ACM), Ethylen-Methylen-Acrylatkautschuk (EMA) und/oder Ethylen-Vinylacetat-Kautschuk (EVA) sowie Acrylsäureester-Styrol-Copolymerisate.

Als Mischaggregate zum Einrühren des erfindungsgemäßen nanopartikelhaltigen Masterbatches sind Extruder und Innenmischer bevorzugt. Dabei handelt es sich um handelsübliche Mischaggregate, die z.B. bei der Firma Harburg-Freudenberger Maschinenbau GmbH oder Berstorff GmbH erhältlich sind.

Diese Kautschuke mit den nanopartikelhaltigen Masterbatches eignen sich vorzugsweise zur Herstellung von Gummimischungen für Reifen, Schwingungsisolatoren, Schläuche, Kabelummantelungen, Profile oder für Dichtungen.

Die nachfolgenden Beispiele dienen der Erläuterung der Erfindung, ohne dabei limitierend zu wirken.

### Ausführungsbeispiele:

Dabei wurden die folgenden Einsatzstoffe verwendet:
**CNT** = Baytubes® 150P, ein mehrwandiges Carbon-Nanotubes (CNT) der Firma Bayer MaterialScience AG.
**NBR-Latex** = NBR-Latex mit 18,9% Perbunan 2870 F (Feststoffanteil).
**Perbunan 2870 F= NBR -Kautschuk** mit einem Acrylnitrilanteil von 28% und einer Mooney-Viskosität von ML(1+4) bei 100°C von 70 MU, erhältlich bei Lanxess Deutschland GmbH.
**BYK® 151** ≒ die Lösung eines Alkylammoniumsalzes eines polyfunktionellen Polymeren mit anionischem Charakter, erhältlich bei der Firma BYK GmbH, die Mengenangaben in Tabelle 1 beziehen sich auf den Feststoffaateil.
**Rhenosin® W90B** = Weichmacher, erhältlich bei Rhein Chemie Rheinau GmbH.

### 1) Herstellung von Masterbatches mittels Innenmischer (Vergleichsbeispiel):

Die NBR-Masterbatches mit 10 Gew.% CNTs sowie 15 Gew.-% CNTs mit dem in Tabelle 1 angegebenen Dispergiermittel wurden in einem ineinandergreifenden 1,51 Kneter der Firma Gumix S.A. (70% Füllgrad, 50 U/min., T > 100°C) hergestellt. Die Mischzeit betrug ca. 20 min. Mit Hilfe eine Doppelwalze wurden 6 mm Felle hergestellt, an denen die Probekörper für die dynamisch-mechanischen und die elektrischen Widerstandsmessungen durchgeführt wurden. Zudem wurden zwei weitere Masterbatche mit 10% CNT hergestellt, indem der Masterbatch mit 15% auf der Doppelwalze mit weiteren NBR, welches Rhenosin® W90B sowie NBR mit Rhenosin® W90B und zusätzlich Byk® 151 enthielt, verschnitten. Die Rezepturen und Ergebnisse sind in Tabelle 1 zusammengefasst.

### 2) Herstellung von 10%-igen CNT-Masterbatches mittels Ultraschallhomogenisator mit Durchflusszelle (erfindungsgemäß):

### a) Herstellung einer wässrigen CNT-Dispersion

Zur Herstellung von 10%-igen CNT-Masterbatches wurde zunächst 11einer 5%-igen wässrigen CNT-Suspension mit 2,5% des Netz- und Dispergieradditives BYK®151 (bezogen auf die nichtflüchtigen Bestandteile des Dispergieradditives) durch Einrühren in destilliertem Wasser hergestellt. Die Dispergierung der CNT-Agglomerate erfolgte mit einem Ultraschallhomogenisator UIP 1000hd der Firma Hielscher Ultrasonics GmbH, ausgerüstet mit einem Booster BS2d22 zur Verstärkung des Energieeintrages bei 80% der maximalen Sonotrodenleistung. Die 5%-ige CNT-Suspension wurde für ca. 3 h durch die mit Leitungswasser gekühlte Durchflusszelle FC100L1K-1S mit Insert 22 des Homogenisators bei einer Pumpgeschwindigkeit von zunächst 400 g/min (zur Vordispergierung) und ab 20 min. bei 200 g/min, im Kreis gepumpt. Die Leistung der Sonotrode betrug zwischen 280 Watt bis 245 Watt. Die Temperatur lag am Anfang des Dispergiervorganges bei Raumtemperatur und am Ende bei ca. 40°C.

Nach unterschiedlichen Zeitpunkten wurden Proben genommen und anschließend mit einer 2%igen BYK151 Lösung verdünnt. Die Partikelgrößenverteilung wurde mit Laserlicht untersucht. Nach ca. 50 min. werden in den nach dem erfindungsgemäßen Verfahren hergestellten Proben keine CNT-Agglomerate > 1 µm mehr gefunden.

### b) Herstellung eines 10%-Masterbtaches

Entsprechend 2a) wurden 2,51 einer 5%-igen CNT-Suspension mittels Ultraschallhomogenisator für ca. 3 h homogenisiert. Dabei wurde 90 min. bei 400 g/min. gepumpt 10min. bei 300 g/min. und 90 Minuten bei 200 g/min. Nach Ende der Dispergierung wurden zwei Ansätze von 283 g dieser Dispersion mit dem NBR-Latex vermischt und nach wenigen Minuten in 1,3 1 eines warmen (65°C bis 45°C) 2%-igen MgSO₄ Salzbades zur Koagulation gebracht. Das Koagulat wurde filtriert und mit Wasser gewaschen. Das Serum war blank und schäumte stark, aufgrund des enthaltenden Dispergierhilfsmittels. Es enthielt weder CNTs noch Latexanteile. Nach Trocknung im Luftstrom bei Raumtemperatur für 2 Tage wurde eine Ausbeute von 144, 2 g und 144,3 g erhalten. Die maximale Ausbeute liegt bei 150 g inklusive der 7,5 g nicht flüchtige Bestandteile von BYK 151. Die Differenz ist zurückzuführen auf das fehlende (im Serum und Waschwasser) befindliche Dispergiermittel. Der CNT-Masterbatch enthielt weniger als die < 50% des eingesetzten Dispergierhilfsmittels.

### c) Homogenisierung und Trocknung des Masterbatches im Innenmischer

Zur Herstellung von 1,2 kg eines 10%-igen CNT-Masterbatches wurde zunächst eine 5%-ige CNT-Suspension entsprechend 2a) hergestellt. Diese Suspension wurde in 8 Ansätzen zu ca. 150 g entsprechend 2b) koaguliert, filtriert und gewaschen. Die 8 Ansätze wurde feucht in den Innenmischer gegeben und mit 4,2% Rhenosin® W90B versetzt. Es wurde für ca. 30min. unter mehrmaligem Anheben des Stempels zum Verdampfen des Wasser geknetet. Dabei stieg die Temperatur auf ca. 150°C.

### 3) Prüfung der nach 1) und 2) hergestellten Masterbatches

Die in 1) und 2c) hergestellten Masterbatches wurden mit dem RPA 2000 der Firma α -Technologies bei 100°C, 0,5 Hz und mit jeweils zwei Strain Sweeps von 0,3 % bis 1000 % dynamischer Dehnungsamplitude untersucht. Zudem wurde der spezifische elektrische Volumenwiderstand von jeweils fünf Messungen an Proben mit ca. 6 bis 9 mm Dicke mit dem Widerstandsmessgerät Milli-TO3 der Firma H.-P. Fischer Elektronik GmbH & Co. untersucht. Dabei wurde die Elektrode FH 10/15 verwendet. Die Ergebnisse sind in Tabelle 1 dargestellt.

**Tabelle 1**

| Rezepturbestandteile | | **Innenmischer** | | | | **Ultraschall** |
|---|---|---|---|---|---|---|
| Baytubes®C 150 P | | 10 | 15 | 10 | 10 | 10 |
| Rhenosin® W 90B | | | | 4 | 4 | 4 |
| Perbunan® 2870 F | | 90 | 85 | 86 | 84 | 84 |
| Byk®151 | | | | | 2 | 2 |
| RPA (2nd Sweep) | | | | | | |
| Modulus G' (1%) | [kPa] | 197 | 425 | 206 | 211 | 417 |
| Modulus G'(10%) | [kPa] | 167 | 297 | 173 | 178 | 309 |
| Modulus G' (100%) | [kPa] | 71 | 102 | 73 | 75 | 107 |
| Modulus G'(1000%) | [kPa] | 10 | 13 | 11 | 11 | 12 |
| tan δ(1%) | | 0,60 | 0,47 | 0,55 | 0,54 | 0,36 |
| tan δ (10%) | | 0,65 | 0,55 | 0,59 | 0,58 | 0,40 |
| tan δ (100%) | | 1,12 | 1,02 | 1,03 | 1,02 | 0,82 |
| tan δ (1000%) | | 2,81 | 2,77 | 2,73 | 2,66 | 2,96 |
| Elektrischer Widerstands | | | | | | |
| Mittelwert | [Ωm] | 2,7E+07 | 1.0E+05 | | | 1,9E+05 |
| St.Abw. | [%] | 15,0 | 22,5 | | | 22,9 |

| | | | | | | |
|---|---|---|---|---|---|---|
| St.Abw. = Standardabweichung | | | | | | |

Es zeigt sich, dass mit dem neuen Verfahren erfindungsgemäß bei vergleichbaren Anteil an CNTs höhere Moduli und gleichzeitig niedrigere Werte für tan δ und niedrigere spezifische elektrische Widerstände wie für Masterbatches mit dem herkömmlichen Verfahren 1) des Innenmischers. Das Dispergiermittel (niedrigere Moduli, höherer tan δ) hat offenbar keinen negativen Einfluss auf die dynamisch-mechanischen Eigenschaften des Masterbatches. Die Masterbatche, hergestellt nach 1) mit 10% CNTs mit und ohne Byk® 151, weisen nur geringe Unterschiede auf. Der 10%ige Masterbatch hergestellt nach dem erfindungsgemäßen Verfahren nach 2a-c) entspricht dem Masterbatch hergestellt nach Verfahren 1) mit 15%. Damit wird gezeigt, dass bei den nach dem erfindungsgemäßen Verfahren hergestellten Masterbatches weniger Nanopartikel benötigt werden, um vergleichbare Werte für die Moduli G' zu erhalten, was die Kosten in der Endanwendung deutlich herabsetzt.

## Patentansprüche

1. Verfahren zur Herstellung von Carbonnanotubes-haltigenMasterbatches, **dadurch gekennzeichnet, dass** die Carbonnanotubes in einer wäßrigen Suspension in Anwesenheit mindestens eines Dispergiermittels mittels Ultraschallhomogenisator, ausgestattet mit einer Durchflusszelle dispergiert, anschließend mit mindestens einem Polymer-Latex vermischt und danach koaguliert, gegebenenfalls filtriert, gewaschen und anschließend getrocknet werden.

2. Verfahren nach Anspruch 1, **dadurch gekennzeichnet, dass** der Anteil an Carbon-Nanotubes mindestens 10%, bezogen auf den Masterbatch, beträgt.

3. Verfahren nach Anspruch 1 oder 2, **dadurch gekennzeichnet, dass** der Anteil an Carbon-Nanotubes in der Suspension mindestens 5 %, und das Verhältnis von Carbon-Nanotubes zu Dispergiermittels 0,1 : 1 bis 1: 2,5 beträgt.

4. Verfahren nach einem oder mehreren der Ansprüche 1 bis 3, **dadurch gekennzeichnet, dass** als Nanopartikel single-wall, multi-wall, double wall Carbon-Nanotubes eingesetzt werden.

5. Verfahren nach einem oder mehreren der Ansprüche 1 bis 4, **dadurch gekennzeichnet, dass** als Dispergiermittel Seifen, Natriumsalze der Kondensationsprodukte von Alkylnaphthalinsulfonsäuren mit Formaldehyd, Triethanolamin, Amoniumoleat, amoniakalische Lösung von Kasein, Natrium-Kaliumpolyphosphate, Alkylsulfate, Laurylpyridinchlorid, c-Cetyl-Betain, Polyglykolether, olefinische Coplymere mit anionischem Charakter, Alkylammonium-Salze von polyfunktionellen Polymeren mit anionischem Charakter und hochmolekularen Block-Copolymeren mit pigmentaffinen Gruppen eingesetzt werden.

6. Verfahren nach einem oder mehreren der Ansprüche 1 bis 5, **dadurch gekennzeichnet, dass** als Nanopartikel Carbon-Nanotubes mit einer Agglomeratgröße < 1 mm eingesetzt werden.

7. Verfahren nach einem oder mehreren der Ansprüche 1 bis 6, **dadurch gekennzeichnet, dass** das Dispergiermittel zu mehr als 65% in der wässrigen Phase der Suspension verbleibt.

## Claims

1. Method for producing masterbatches containing carbon nanotubes, **characterized in that** the carbon nanotubes are dispersed in an aqueous suspension in the presence of at least one dispersant by means of an ultrasonic homogenizer equipped with a flow cell, then mixed with at least one polymer latex and subsequently coagulated, optionally filtered, washed and subsequently dried.

2. Method according to Claim 1, **characterized in that** the fraction of carbon nanotubes is at least 10%, based on the masterbatch.

3. Method according to Claim 1 or 2, **characterized in that** the fraction of carbon nanotubes in the suspension is at least 5%, and the ratio of carbon nanotubes to dispersant is 0.1: 1 to 1:2.5.

4. Method according to one or more of Claims 1 to 3, **characterized in that** nanoparticles used are single-wall, multi-wall and/or double-wall carbon nanotubes.

5. Method according to one or more of Claims 1 to 4, **characterized in that** dispersants used are soaps, sodium salts of the condensation products of alkyl-naphthalenesulphonic acids with formaldehyde, triethanolamine, ammonium oleate, ammoniacal solution of casein, sodium potassium polyphosphates, alkyl sulphates, laurylpyridine chloride, C-cetyl betaine, polyglycol ethers, olefinic copolymers with anionic character, alkylammonium salts of polyfunctional polymers with anionic character, and high molecular mass block copolymers with pigment affinity groups.

6. Method according to one or more of Claims 1 to 5, **characterized in that** nanoparticles used are carbon nanotubes having an agglomerate size < 1 mm.

7. Method according to one or more of Claims 1 to 6, **characterized in that** more than 65% of the dispersant remains in the aqueous phase of the suspension.

## Revendications

1. Procédé de fabrication de mélanges maîtres contenant des nanotubes de carbone, **caractérisé en ce que** les nanotubes de carbone sont dispersés dans une suspension aqueuse en présence d'au moins un dispersant au moyen d'un homogénéisateur à ultrasons équipé d'une cellule d'écoulement, puis mélangés avec au moins un latex polymère et ensuite coagulés, éventuellement filtrés, lavés, puis séchés.

2. Procédé selon la revendication 1, **caractérisé en ce que** la proportion de nanotubes de carbone est d'au moins 10 %, par rapport au mélange maître.

3. Procédé selon la revendication 1 ou 2, **caractérisé en ce que** la proportion de nanotubes de carbone dans la suspension est d'au moins 5 % et le rapport entre les nanotubes de carbone et le dispersant est de 0,1:1 à 1:2,5.

4. Procédé selon une ou plusieurs des revendications 1 à 3, **caractérisé en ce que** des nanotubes de carbone monoparois, multiparois, biparois sont utilisés en tant que nanoparticules.

5. Procédé selon une ou plusieurs des revendications 1 à 4, **caractérisé en ce que** des savons, des sels de sodium des produits de condensation d'acides alkylnaphtaline-sulfoniques avec du formaldéhyde, de la triéthanolamine, de l'oléate d'ammonium, une solution ammoniacale de caséine, des polyphosphates de sodium-potassium, des sulfates d'alkyle, du chlorure de lauryl-pyridine, de la C-cétyl-bétaïne, des polyéthers de glycol, des copolymères oléfiniques à caractère anionique, des sels d'alkyl-ammonium de polymères polyfonctionnels à caractère anionique et des copolymères séquencés de poids moléculaire élevé à groupes présentant une affinité avec les pigments sont utilisés en tant que dispersant.

6. Procédé selon une ou plusieurs des revendications 1 à 5, **caractérisé en ce que** des nanotubes de carbone ayant une taille d'agglomérat < 1 mm sont utilisés en tant que nanoparticules.

7. Procédé selon une ou plusieurs des revendications 1 à 6, **caractérisé en ce que** le dispersant reste à plus de 65 % dans la phase aqueuse de la suspension.
